(19) Europäisches Patentamt
European Patent Office
Office européen des brevets

(11) **EP 3 184 963 A1**

(12) **EUROPEAN PATENT APPLICATION**

(43) Date of publication:
**28.06.2017 Bulletin 2017/26**

(51) Int Cl.:
**G01C 21/20** (2006.01)     **G01S 5/00** (2006.01)
**H04W 4/00** (2009.01)

(21) Application number: **15307120.4**

(22) Date of filing: **23.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **GILBERTON, Philippe**
  **35576 Cesson-Sévigné (FR)**

• **MONTALVO, Luis**
  **35576 Cesson-Sévigné (FR)**
• **LOUZIR, Ali**
  **35576 Cesson-Sévigné (FR)**
• **NGUYEN, Thuan Quynh**
  **35708 Rennes Cedex 7 (FR)**

(74) Representative: **Huchet, Anne**
  **TECHNICOLOR**
  **1-5, rue Jeanne d'Arc**
  **92130 Issy-les-Moulineaux (FR)**

(54) **APPARATUS AND METHOD FOR MAGNETIC FIELD MAP GENERATION FOR INDOOR LOCALIZATION**

(57) Magnetic field information is collaboratively collected to allow a magnetic fingerprint to be constructed for a given location. An authorized user employs a mobile device (102) that has an embedded magnetometer (110) to assist in gathering magnetic field information using an architectural plan displayed on the mobile device. An embedded gyroscope (112) and/or accelerometer (116) can also be used in the mobile device (102) to assist in providing orientation information for magnetic field information and to assist users in proper indication of their position on the mobile device (102). An application (202) on the mobile device (202) transmits gathered information to a centralized server (222). The server (222) processes the information to help build a magnetic map of the given architectural plan based on input from multiple mobile devices. Updates of the magnetic map can also be obtained from the server (222) by a mobile device (102).

FIG. 2

EP 3 184 963 A1

**Description**

TECHNICAL DOMAIN

The present principles relate to a system and a method for generating a magnetic map, and more particularly, to a system and a method for crowd generation of a magnetic map for indoor localization.

BACKGROUND

Currently, there is a movement to collect data about user activities and the context of the activities using an increasingly number of connected devices and sensors. The analysis of this data, collected by ubiquitous fixed or mobile computing devices such as the smartphones held by users, opens the door to innovative applications and services in many different areas. A key bit of information for inferring the user's activity when at home is the knowledge of his location. For example, knowing whether the user is in the living room, in the kitchen, or in his bedroom gives a very valuable insight about the present user's activity. While location aware applications are now well developed, most of them rely on a GPS system which is not well suited for indoor localization due to poor signal strength and multipath effects.
One example of technology for indoor localization is based on an "RF Fingerprint" and requires a minimal dedicated infrastructure. The technology is based on the use of multiple radios, embedded in mobile terminals (such as WiFi, Bluetooth, broadcast, etc.) for localization. However, the RF fingerprint technique suffers from two fundamental drawbacks - it requires a heavy measurement campaign to construct the radio map database with the right granularity, which is time consuming and not very user friendly for a consumer application, and the radio map evolves with time. The short time instability of the radio map is due to the well-known instability of the RSSI (Received Signal Strength Indicator) signal resulting from the small scale multipath fading, while the mid/long term instability is due to the change in the number and location of the active radio transmitters. This is particularly true for WiFi transmitters.
Another approach is to use the ambient magnetic field, instead of the RF electric field, as a localization fingerprint. The "magnetic fingerprint" method takes advantage of the distortions of the earth's magnetic field (also called a geomagnetic field), at a given location, introduced by the ferromagnetic parts of the building structure and any ferromagnetic objects to infer the user's location. During the positioning phase, the ambient magnetic field can be measured by the magnetometer embedded in mobile devices and compared with a magnetic field map that has been created in advance for the building. However, like any fingerprint method, it still requires a lot of time and effort to generate the initial magnetic field map of each building.

SUMMARY

The present principles provide indoor localization capabilities based on magnetic fingerprint technology. User friendly techniques are incorporated for collaboratively and progressively generating an indoor map of an ambient magnetic field that can then be utilized by a localization method. The magnetic field map is constructed by one or more authorized users using magnetometers embedded in their mobile devices. This permits a continuous refreshment of a magnetic field fingerprint database without regular survey/updates required except for significant interior changes like, for example, moving large metallic objects and furniture that may induce an important change in the magnetic field distribution. The present principles also offer a certain degree of privacy and reliability since only authorized users are allowed to participate and only the locations where the user might be are mapped.
One embodiment includes an apparatus for magnetic map information gathering comprising a means for displaying an architectural plan on a mobile device according to an orientation of the mobile device, a means for receiving an indication of a position of a mobile device user on the architectural plan, a means for obtaining a scale of the displayed architectural plan in response to the received indication, a means for obtaining ambient magnetic field information associated with the indicated position, a means for obtaining identification information of a mobile device or user, and a means for transmitting the indicated position, scale, ambient magnetic field information and identification information to a server. Alternative embodiments can also include a means for displaying an indicator of a user's orientation on the architectural plan. The identification information of the mobile device can a media access control MAC address in some embodiments. Other embodiments can include at least one of a means for receiving and a means for transmitting that includes at least one of a wired communication means and a wireless communication means. Still yet other embodiments can also include a means for accepting an indication of position when at least one wall displayed on the architectural plan is parallel to at least one side of the mobile device and/or a means for receiving an updated magnetic field map for localization from a server.
Further embodiments can include a method for gathering magnetic map information comprising displaying an architectural plan on a mobile device according to an orientation of the mobile device, receiving an indication of a position of a mobile device user on the architectural plan, obtaining a scale of the displayed architectural plan in response to the received indication, obtaining ambient magnetic field information associated with the indicated position, obtaining identification information for at least one of a mobile device and a user, and transmitting the indicated position, scale, ambient magnetic field information and identification information to a server. Alternative embodiments can also include using a media access control MAC address as identification information for the mobile device, accepting an indication of position when at least one wall displayed on the architectural plan is parallel to at least one side of the mobile device, displaying an indicator of a user's orientation on the architectural plan and/or receiving an updated magnetic field map for localization from a server. The embodiments can be further refined wherein at least one of the receiving of the architectural plan and the transmitting of information is accomplished over a wired communication means.

Additional embodiments can also include a method for generating a magnetic map comprising receiving indicated position, scale, ambient magnetic field information and identification information, determining a geographic volume based on the indicated position and scale, averaging the magnetic field information with prior measurements associated with the indicated position and associated to geometrical points inside the determined geographical volume, determining new values for magnetic field information and validating values for localization use when a number of prior measurements approximate a current location estimation. Alternative embodiments can include transmitting an updated magnetic field map for localization to a mobile device.

Other additional embodiments can include an apparatus for generating a magnetic map comprising a means for receiving indicated position, scale, ambient magnetic field information and identification information, a means for determining a geographic volume based on the indicated position and scale, a means for averaging the magnetic field information with prior measurements associated with the indicated position and associated to all geometrical points inside the determined geographic volume, a means for determining new values for magnetic field information and a means for validating values for localization use when a number of prior measurements approximate a current location estimation.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

BRIEF DESCRIPTION OF THE DRAWINGS

FIG. 1 depicts an example collaborative magnetic map generation apparatus in accordance with an embodiment of the present principles.
FIG. 2 depicts another example collaborative magnetic map generation apparatus in accordance with an embodiment of the present principles.
FIG. 3 depicts an example zoom operation on a mobile device in accordance with an embodiment of the present principles.
FIG. 4 depicts an example locating operation on a mobile device in accordance with an embodiment of the present principles.
FIG. 5 depicts an example orienting operation on a mobile device in accordance with an embodiment of the present principles.
FIG. 6 depicts an example coordinate system determination for a mobile device in accordance with an embodiment of the present principles.
FIG. 7 depicts an example of rotational effects on a coordinate system for a mobile device in accordance with an embodiment of the present principles.
FIG. 8 depicts an example data format for a mobile device in accordance with an embodiment of the present principles.
FIG. 9 depicts an example geometrical volume definition in accordance with an embodiment of the present principles.
FIG. 10 depicts an example of volume filling based on finest spatial granularity in accordance with an embodiment of the present principles.
FIG. 11 depicts an example of building a magnetic map in accordance with an embodiment of the present principles.
FIG. 12 depicts another example of building a magnetic map in accordance with an embodiment of the present principles.

FIG. 13 depicts an example magnetic map building summarizing method in accordance with an embodiment of the present principles.
FIG. 14 depicts an example collaborative magnetic map building of a room in accordance with an embodiment of the present principles.
FIG. 15 depicts a flow diagram of a method of obtaining magnetic field information with a mobile device in accordance with an embodiment of the present principles.
FIG. 16 depicts a flow diagram of a method of collaborative magnetic map building in a server in accordance with an embodiment of the present principles.
FIG. 17 depicts a flow diagram of a method of collaborative magnetic map building in accordance with an embodiment of the present principles.

DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

One way to reduce the required effort for generating a magnetic field map of a building is to do it collaboratively by using magnetometers embedded in mobile devices of different users (e.g., home family members, company employees and/or volunteers among store customers, etc.). This type of "crowd sourcing" or collaborative effort of magnetic field map building raises the issue of the reliability of the collected data, mainly due to the fact that the data can be collected by nonprofessional users who are more or less engaged in other activities; the variability between the sensors used in different mobile devices; and/or the short/long term time instability of a measured magnetic field. Ideally, the localization of a user during a mapping phase should be simple, user friendly and easy to handle by a nonprofessional user who is not necessarily aware about the technology behind it. The accuracy of the measured magnetic field should be coherent with the localization accuracy that should be inferred by a measurement system. Finally, the effectiveness of the localization method based on the magnetic field map requires measuring the three components of the magnetic field which depends on the orientation of a mobile device. Therefore, a simple and intuitive way of orienting the mobile device during the mapping phase should be used.

The present principles provide alternative collaborative (crowd sourcing) techniques for generating an indoor map of an ambient magnetic field that is well suited for magnetic fingerprint localization processes. The techniques take advantage of the characteristics of a magnetic field. The present principles can utilize apparatus that include, for example, mobile devices with magnetometers to help gather magnetic field information. "Authorized" users (e.g., family members, etc.) typically share an architectural plan with rooms including an arrangement of the main furniture, such as, for example, tables, armchairs, sofas, major home appliances, etc. Thus, authorization, for example, can be based on users who are residents or permitted to use a location associated with the architectural plan. Pre-screening of users prevents unqualified users from corrupting gathered data through incorrect readings and/or through intentional misuse of apparatus for gathering the data. Users who lack a tie to a particular location might also only frequent the location on rare occasions and provide little data for evaluation. They would also lack any interest in using the data and might not be as diligent as a user with a vested interest in the outcome.

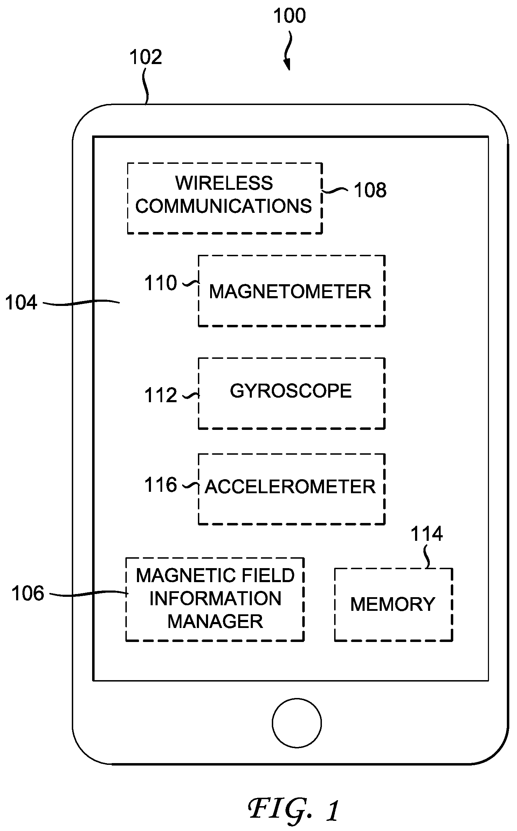

In FIG. 1, an example collaborative magnetic field map generation apparatus 100 is shown in accordance with an embodiment of the present principles. The apparatus 100 in this example is a mobile device 102 with a display or screen 104. The mobile device 102 can be, for example, a smartphone, a tablet and/or any type of mobile device that allows user interaction and the like. The display 104 can be, for example, a touch screen meant for use by touching the display 104 with a finger and the like by a user and/or the display 104 can be a screen that uses a writing instrument such as a stylus and the like to write and/or make selections on the screen. The method of input to the apparatus 100 is not limited to these two types of displays. For example, there can also be a pointer that is controlled via a remote mouse and/or keys on the apparatus 100 that a permit a user to make/indicate a selection on a display/screen.

The illustrated example of apparatus 100 is comprised of a magnetic field information manager 106 which manages capturing of magnetic field information, timing information, user and/or mobile identification (ID) information, architectural plan information and input/output information, etc. The apparatus 100 includes a wireless communication means 108 that can include, for example, WiFi, Bluetooth, etc. (includes short and/or long range wireless communication means). The apparatus 100 typically has an embedded magnetometer 110, gyroscope 112 and/or accelerometer 116. The magnetometer 110, gyroscope 112 and accelerometer 116 are not required to be embedded in the mobile device and can be externally attached to the apparatus 100. The attachment is typically accomplished such that movement of the apparatus 100 causes similar movement of the magnetometer 110, gyroscope 112 and/or accelerometer 116. The apparatus 100 can also include a memory 114 for storing information such as, for example, magnetic field information, timing information, authorization information, indicated location information, orientation information and/or mobile device/user ID information and the like.

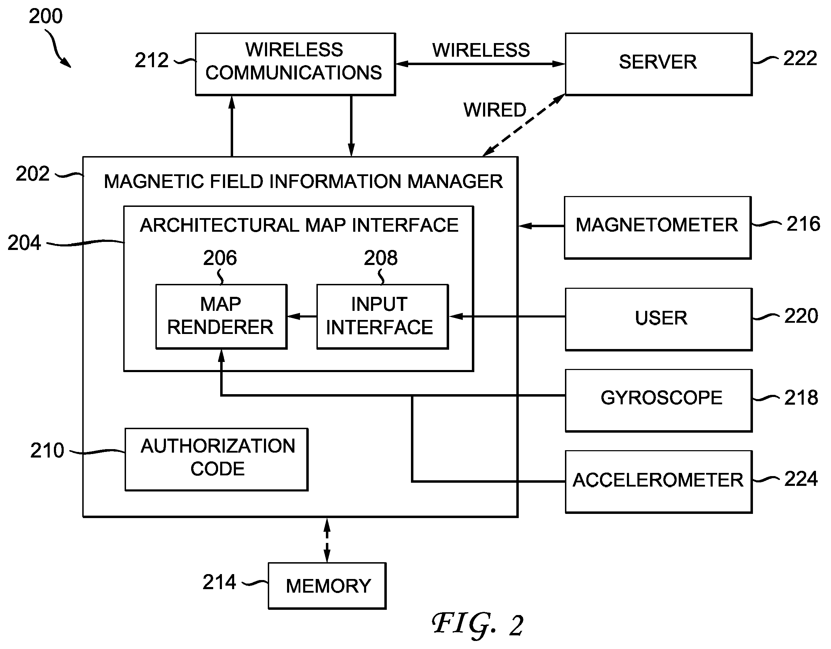

Turning to FIG. 2, another example collaborative magnetic field map generation apparatus 200 is illustrated in accordance with an embodiment of the present principles. The apparatus 200 includes a magnetic field information manager 202 comprised of an architectural map interface 204. The architectural map interface 204 becomes operational, for example, when an authorization code 210 is present and correct. The architectural map interface 204 includes a map renderer 206 and an input interface 208. The map renderer 206 supplies an architectural map to a mobile device display. The architectural map is typically received from a server 222 via wired and/or wireless communication means. Orientation information associated with a mobile device can be received from a gyroscope 218 and/or accelerometer 224 to facilitate in correctly rendering the architectural plan on the mobile device display by the map renderer 206. The map renderer 206 also renders different versions of the architectural map based upon inputs from the input interface 208. Such inputs can include, but are not limited to, floor selection, room selection, area selection and/or zoom (i.e., scale) selection and the like. The input interface 208 allows input from the mobile device to be utilized by the architectural map interface 204. The input interface 208 can accept key/button hardware selections, soft key selections, stylus type screen inputs and/or user touch selections and the like. The input interface 208 is typically responsible for receiving indicated position information initiated by a user 220 of a mobile device.

When an input is received by the input interface 208, the magnetic information manager 202 records magnetic field information from the magnetometer 216 along with timing information. The authorization code 210 can also contain a user ID and/or a mobile device ID that can be included along with information transmitted by the magnetic field information manager 202. The user ID and/or mobile ID can also be received directly from the user 220 (e.g., typed in, scanned in and/or otherwise input into the mobile device, etc.) and/or from a mobile device itself (e.g., data that was entered previously, etc. like owner information and/or a unique media access control (MAC) address, etc.). The magnetic field information manager 202 can send information autonomously (i.e., without request, at timed intervals and/or only under certain conditions, etc.) and/or only when requested by server 222. Information transfer can also be initiated when a physical connection is made (e.g., when a mobile device is placed in a docking station and/or cable plugged in, etc.).

An authorized user can at any time decide to run an application such as a magnetic field information manager 106/202 on their mobile device which displays the architectural plan. The application allows the authorized user to indicate their position in a user-friendly manner - for example, in a living room, sitting on a sofa in front of a television, in a kitchen in front of a refrigerator, etc. The application can also provide a zooming or scaling capability that includes at least a part of the map with a user position and, in one embodiment, includes at least two perpendicular walls which are used for helping the user in the estimation of their location. When a pointer or other indicator (e.g., arrow head) is moved on the map, its relative distance to the two closest perpendicular walls is displayed helping a user to assess his position. The orientation of a mobile device is utilized such that a user, depicted on the map, is displayed by the mobile device facing (oriented) in the same direction as in the real world (the most intuitive map orientation) and the sides of the mobile device are parallel to the displayed location walls (e.g., when the location is assumed to be of a rectangular shape). After orienting the mobile device and validating the user's position on the map, a set of measurements of the three components of the magnetic field vector at the indicated location is obtained using, for example, a magnetometer embedded in a mobile device. The vector of the three magnetic field components along with an associated accuracy provided by a zoom/scale factor of a displayed architectural plan, a mobile device/user identifier and time stamps corresponding to each magnetic field are sent to a central server (e.g., a gateway and the like, a locally or remotely located server, etc.) using a wired and/or wireless communication means available to the mobile device (e.g., cable connection, docking station, WiFi, Bluetooth, etc.).

The data received, for example, at the server side, is used for updating a magnetic field map under construction. The indicated location and associated zoom/scale defines a geographic volume according to a predefined formula. The value of each magnetic field component (in an absolute reference) averaged over the set of measurements associated with the indicated position is associated to all the geometrical points (with the finest granularity) inside the volume defined by the position, with an accuracy defined by the zoom factor (scale). A new value of the three magnetic field components, associated to each geometrical point (with the finest granularity), is calculated taking into account the previous value and the accuracies of the previous and the new values according to a defined formula.

During the building phase of the ambient magnetic field map, the user position can be estimated utilizing a localization process that can be hosted on a server, such as the gateway, which fundamentally analyzes the similarities between the current measurement of the magnetic field components at the given location and those stored so far in the magnetic field map under construction before updating. The estimated location is then compared with the received position validated by the user with its associated accuracy. When the actual position (i.e., a position indicated by an authorized user during the map building phase) is compliant with the estimated location for a predefined number of measurements, the map is considered ready for use as it is by the localization process for that localization. It can be downloaded by mobile devices for running a localization application on a mobile device when, for example, a wired and/or wireless link between the mobile device and the server is not available. The application can also run even with a wired and/or wireless link between the mobile device and a server. The continuously refreshed magnetic field map at the server side can be downloaded to the mobile device of an authorized user at their request and/or automatically (without a user initiated request). Main updates of the magnetic map, stored in the mobile device, can be done regularly and, for example, at the occasion of significant changes, such as home equipment refurbishment, etc.

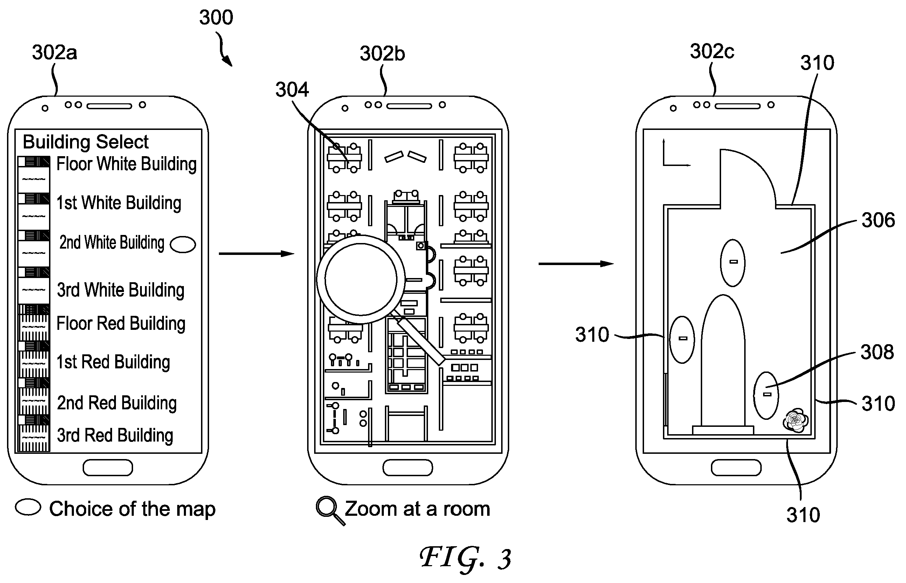

A user from an "authorized" list of users (e.g., family members, etc.) who has previously registered their mobile device with the server, etc. and shared an architectural plan of a home or other structure with different parts/rooms including the arrangement of large objects (e.g., the main furniture, such as tables, armchairs, sofas, major home appliances, etc.) can, at any time, run a "magnetic-crowd-mapping" application on their mobile device, which displays the architectural plan. The user utilizes the architectural plan to indicate their position with the accuracy allowed by the architectural plan and a zoom factor $k_{Zoom}$ (scale). In FIG. 3, an example zoom or scaling operation 300 on a mobile device 302a, 302b, 302c is illustrated in accordance with an embodiment of the present principles. The zooming/scaling operation allows a part 306 of an architectural map 304 including a user position 308 and, according to one embodiment, at least two walls 310 which can be used for helping the user in the estimation of their position. Mobile device 302a illustrates a list of architecture plans that a user can select. Mobile device 302b illustrates an architectural floor plan of the selected architecture plan. Mobile device 302c illustrates a selected room from the architectural floor plan (finest granularity or largest zoom factor).

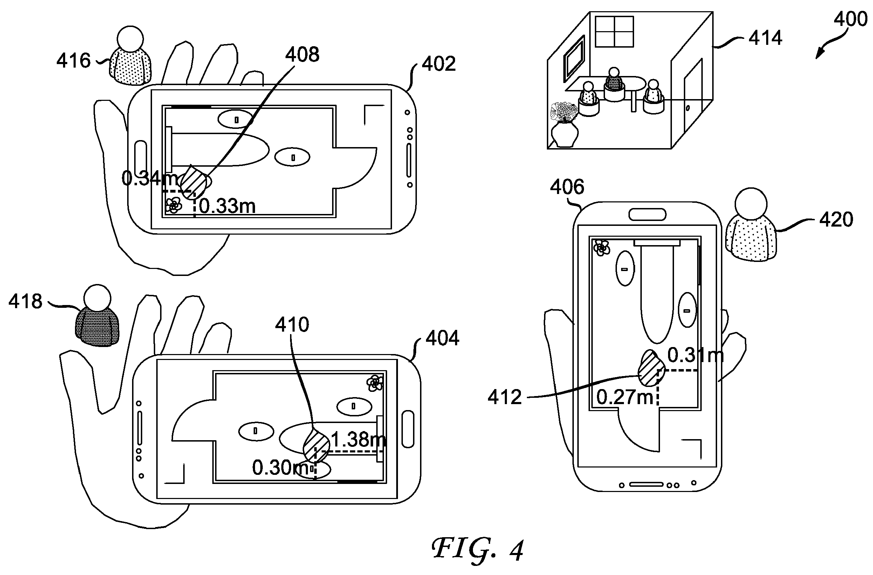

Looking at FIG. 4, an example locating operation 400 on mobile devices 402-406 is shown in accordance with an embodiment of the present principles. When pointers 408-412 are moved in a map, their relative distances to the two closest walls is displayed helping users 416-420 to assess their position. In this illustration, the users 416-420 are seated in a room 414. However, each user 416-420 is oriented differently in the room. This is evident, for example, where user 416 has the mobile device 402 which shows him located by pointer 408. User 418 has the mobile device 404 which shows him located by pointer 410. User 420 has the mobile device 406 which shows him located by pointer 412.

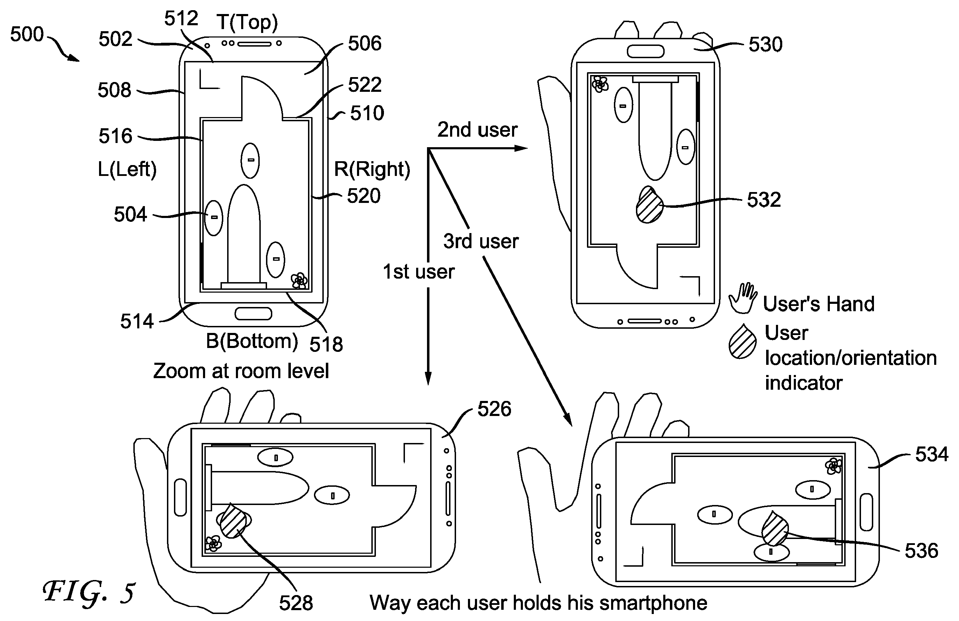

In FIG. 5, an example orienting operation 500 on a mobile device is shown in accordance with an embodiment of the present principles. The orientation of a mobile device 502 is such that a user 504 depicted in a map 506 (i.e., architectural plan) displayed by the mobile device 502 is facing in the same direction as in the real world (the most intuitive map orientation) and sides 508-514 of the mobile device 502 (e.g., assumed to be a rectangular shape) are parallel to location displayed walls 516-522 (e.g., the location is assumed, for this example, to be a rectangular shape). As shown in FIG. 5, a mobile device 526 depicts the orientation/position of a first user with an orientation/position indicator 528, a mobile device 530 depicts the orientation/position of a second user with an orientation/position indicator 532 and a mobile device 534 depicts the orientation/position of a third user with an orientation/position indicator 536 in the same room.

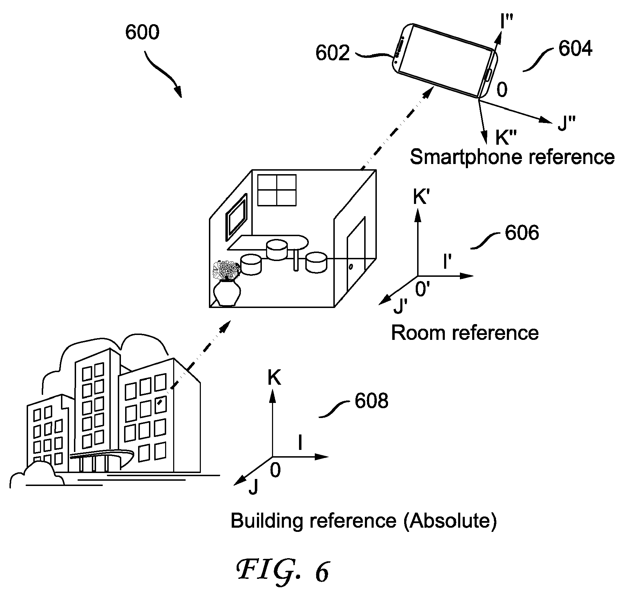

Such an approach makes it possible to know without any ambiguity a three-dimensional (3D) orientation of a mobile device in a reference attached to the room/place displayed on the display. Indeed, the two-dimensional (2D) orientation in a horizontal plan is provided by the above described approach while a vertical orientation is given by a gravity sensor (such as a gyroscope and/or an accelerometer). The position of the mobile device in an absolute reference is then obtained using the knowledge of the room/place relative reference. Turning to FIG. 6, an example coordinate system determination 600 for a mobile device 602 is illustrated in accordance with an embodiment of the present principles. FIG. 6 shows the relation between a coordinate system 604 of a mobile device 602 and a coordinate system of a physical location, (e.g., the room 606 or a building 608). The three components of a magnetic field measured by a mobile device can be expressed in an absolute reference which is independent from a mobile device orientation using the corresponding rotation and translation matrices. The rotation matrix can be expressed as the multiplication of three basic rotations.

$$\{R = R_z(\alpha)\, R_y(\beta)\, R_x(\gamma)\}, \qquad\qquad (Eq.\ 1)$$

where:

$$R_x(\gamma) = \begin{bmatrix} 1 & 0 & 0 \\ 0 & cos\gamma & -sin\gamma \\ 0 & sin\gamma & cos\gamma \end{bmatrix} \quad R_y(\beta) = \begin{bmatrix} cos\beta & 0 & -sin\beta \\ 0 & 1 & 0 \\ sin\beta & 0 & cos\beta \end{bmatrix} \quad R_z(\alpha) = \begin{bmatrix} cos\alpha & -sin\alpha & 0 \\ sin\alpha & cos\alpha & 0 \\ 0 & 0 & 1 \end{bmatrix}$$

$R_x(\gamma)$ is the clockwise rotation, about the x-axis, by an angle $\gamma$. $R_y(\beta)$ is the clockwise rotation, about the y-axis, by an angle $\beta$. $R_z(\alpha)$ is the clockwise rotation, about the z-axis, by an angle $\alpha$.

Similarly, considering two Cartesian coordinate systems ($x$, $y$, $z$) and ($x'$, $y'$, $z'$), where: x is parallel to $x'$, y is parallel to $y'$, and z is parallel to $z'$, and the origin of the second system coincides with the point ($x_0$, $y_0$, $z_0$) of the first

system, the translation matrix is given by:

$$\begin{bmatrix} x \\ y \\ z \end{bmatrix} = \begin{bmatrix} x + x_0 \\ y + y_0 \\ z + z_0 \end{bmatrix}$$

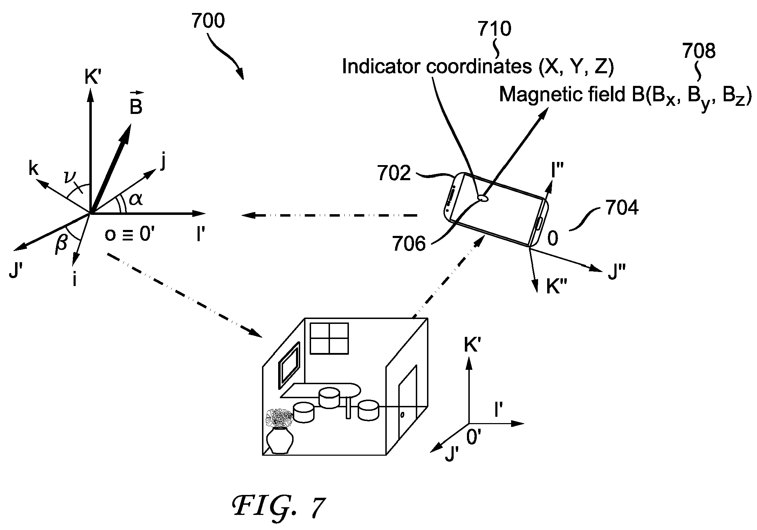

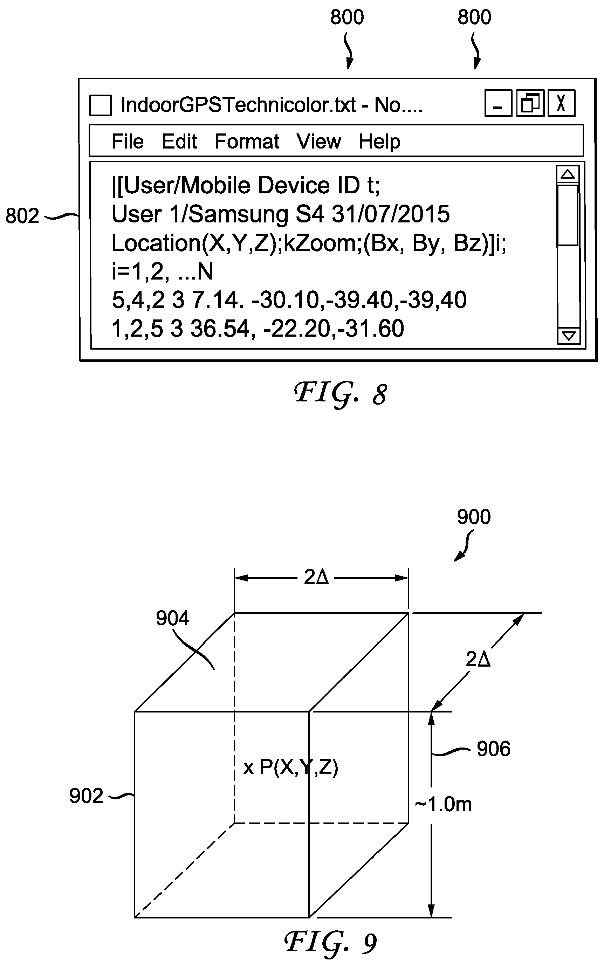

Looking at FIG. 7, an example 700 of rotational effects on a coordinate system 704 for a mobile device 702 is depicted in accordance with an embodiment of the present principles. After orienting a mobile device 702 and validating a user's location on a map, a set of $N$ measurements of the three components of a magnetic field vector at an indicated location 706 is used (where $N$ is a positive integer greater than 30 to smooth the inherent measurement errors). A tuple 708 constituted of: the vector with the three magnetic field components ($B_x$, $B_y$, $B_z$) measured by the three-axis magnetometer of a mobile device (i.e., components in the local mobile device reference ($i,j,k$) 704), a validated location given by the three coordinates ($X, Y, Z$) 710 in an absolute reference ($I, J, K$) and associated accuracy provided by a zoom/scale factor $k_{Zoom}$ of the displayed plan, together with a mobile device/user identifier (ID) and a time stamp ($t$) corresponding to a magnetic field record, is sent to a server (which can be, for example, a gateway and/or other local or remotely located server) using a wired and/or wireless communication system available in the mobile device 702 (e.g., cable, WiFi, Bluetooth, etc.). In FIG. 8, an example 800 of a data format 802 for a mobile device is shown in accordance with an embodiment of the present principles. The format 802 can include, for example: User/mobile device ID; $t$; Location(X, Y, Z); $k_{Zoom}$; ($B_x$, $By$, $B_z$)]$i$; $i$=1, 2, ...N.

The received data at the server side, is first transformed into an absolute reference and then used for updating a magnetic field map under construction. An indicated position and an associated zoom factor $k_{Zoom}$ (i.e., a positive integer scaling factor) define a geographic volume V according to a predefined formula. For $k_{Zoom}$ = 1; the scale = scale of the architectural plan. For that scale, a spatial resolution corresponding to the largest uncertainty $\Delta_{Max}$ is associated. The actual uncertainty $\Delta$ is then inferred from the zoom factor as:

$$\Delta = \Delta_{Max} / k_{Zoom} \qquad \qquad \text{(Eq. 2)}$$

FIG. 9 depicts a geometrical volume definition 900 in accordance with an embodiment of the present principles. $V$ is the volume of a parallelepiped 902 centered on $P(X, Y, Z)$ with a square section 904 of $2\Delta$ side and a height 906 of, for example, 1m (typically a value between 0.8m and 1.2m, corresponding to the height position of a mobile device held by a user, but it can be any value). The magnetic field is assumed to be invariant along the defined $Z$ interval.

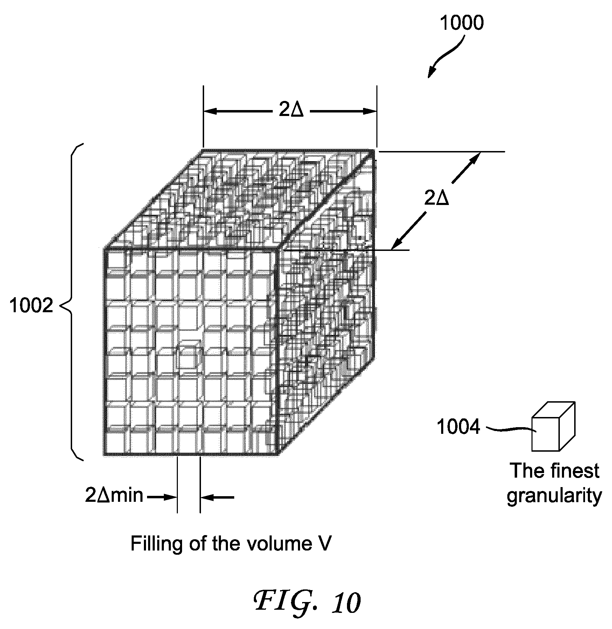

Referring to FIG. 10, an example 1000 of a volume filling 1002 based on a finest spatial granularity 1004 is illustrated in accordance with an embodiment of the present principles. The value of each magnetic field component (in the absolute reference) averaged over a set of measurements associated with an indicated location, is associated to all the geometrical points (with the finest granularity) inside the geometrical volume 1002 defined by the location, with an accuracy defined by the zoom factor (scaling factor):

$$\Delta_{min} = \Delta_{Max} / (k_{Zoom})_{Max} \qquad \qquad \text{(Eq. 3)}$$

A new value of the three magnetic field components [($B_x$, $B_y$, $B_z$)] associated to each geometrical point (with the finest granularity) is calculated taking into account the previous value [($B_x$, $B_y$, $B_z$)]$_{n-1}$ and the just received value [($B_x$, $B_y$, $B_z$)]$_n$ and their associated uncertainties (respectively $\delta_{n-1}$ and $\delta_n$) according to a defined formula.

$$(B_x)_n = A_n +/- \delta_n; \qquad \qquad \text{(Eq. 4)}$$

where $A_n$ is the average of the $K$ values of the magnetic field components $B_x$ measured by the mobile device at the indicated location and $\delta_n$ is the Standard Deviation (SD) of the measured $K$ values.

The novel $B_x$ value is calculated as:

$$B_x = [W_{n-1} \times (B_x)_{n-1} + W_n \times (B_x)_n] / [W_{n-1} + W_n]; \qquad \qquad \text{(Eq. 5)}$$

where ($n$-1) index refers to the previous value, $W_n$ = 1/$\Delta_n$ and $\Delta_n$ = $\Delta_{Max}$/ ($k_{Zoom}$)$_n$;

The novel $\delta$ value is calculated as:

$$\delta^2 = [\delta_{n-1}^2 \times W_{n-1} + \delta_n^2 \times W_n] / [W_{n-1} + W_n]; \qquad \text{(Eq. 8)}$$

where ($n$-1) index refers to the previous value, $W_n = 1/\Delta_n$ and $\Delta_n = \Delta_{ax}/ (k_{Zoom})_n$.

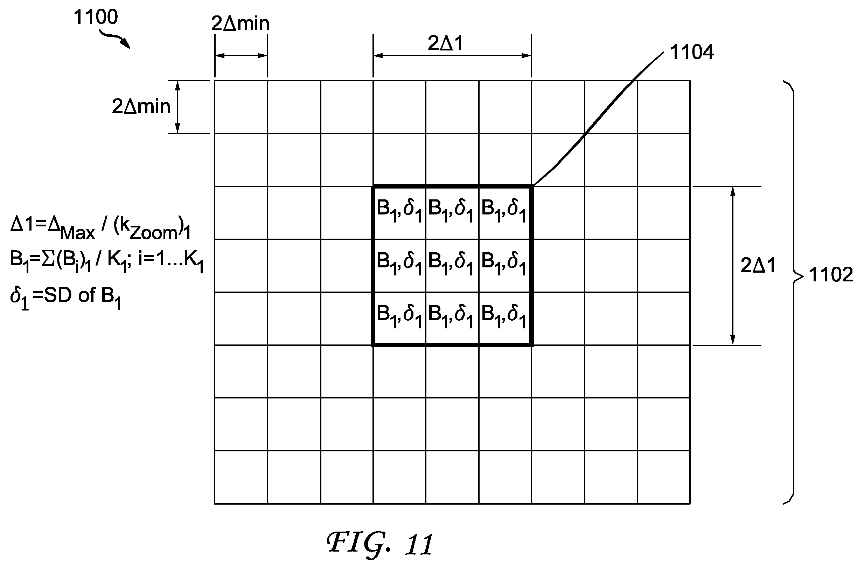

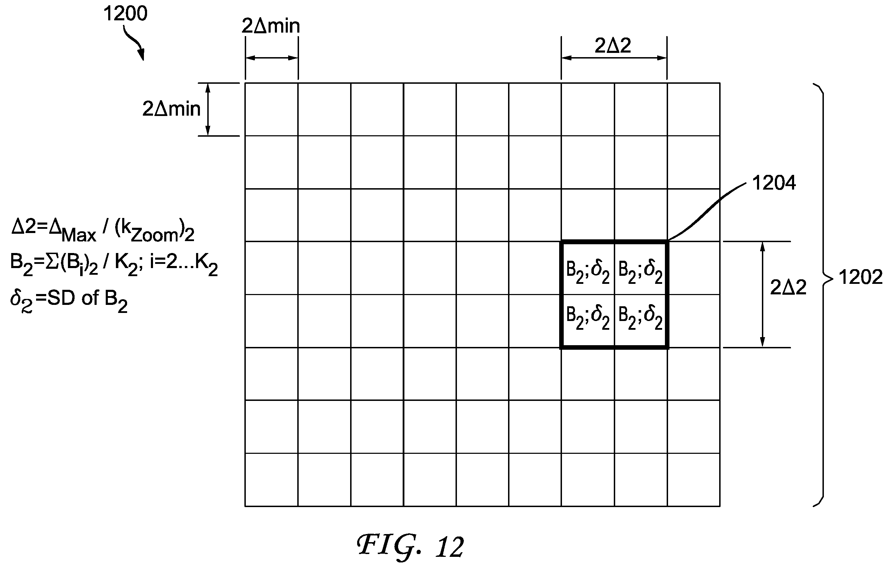

Looking at FIG. 11, an example 1100 (for Measurement1) of building a magnetic field map 1102 in accordance with an embodiment of the present principles. The magnetic field map 1102 building (in two dimensions for clarity; the $z$ axis is not taken into account over which the magnetic field is assumed to be invariant) for two successive measurements: Measurement 1 (shown in FIG. 11) and Measurement 2 (shown in FIG. 12) done around the same area with two different zoom factors (scaling factors): $(k_{Zoom})_1$ and $(k_{Zoom})_2$ and two different accuracies: $\delta_1$ and $\delta_2$. It is assumed that there is no prior data for this area before the first measurement. Also for clarity, the index corresponding to the coordinate axis (x, y or z) is omitted. Measurement 1: $K_1$ measurement values of the magnetic field are taken in a place indicated by the user with the zoom factor $(k_{Zoom})_1$. The position indicated by the user is at the middle of the inner square 1104 of side $2\Delta_1$.

In FIG. 12, another example 1200 (for Measurement 2) of building a magnetic map 1202 in accordance with an embodiment of the present principles. Measurement 2: $K_2$ measurements of the magnetic field are taken in a place indicated by the user with the zoom factor (scaling factor) $(k_{Zoom})_2$. The position indicated by the user is at the middle of an inner square 1204 of side $2\Delta_2$.

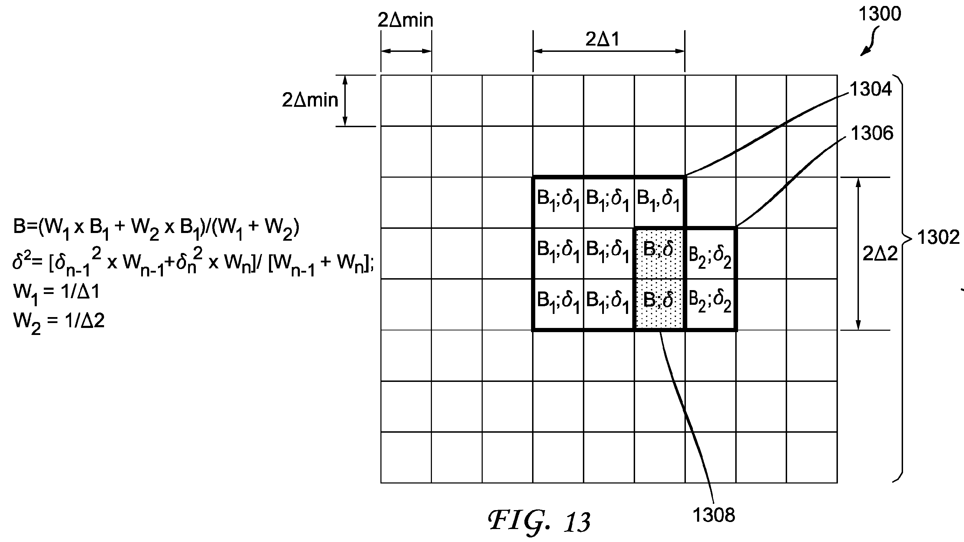

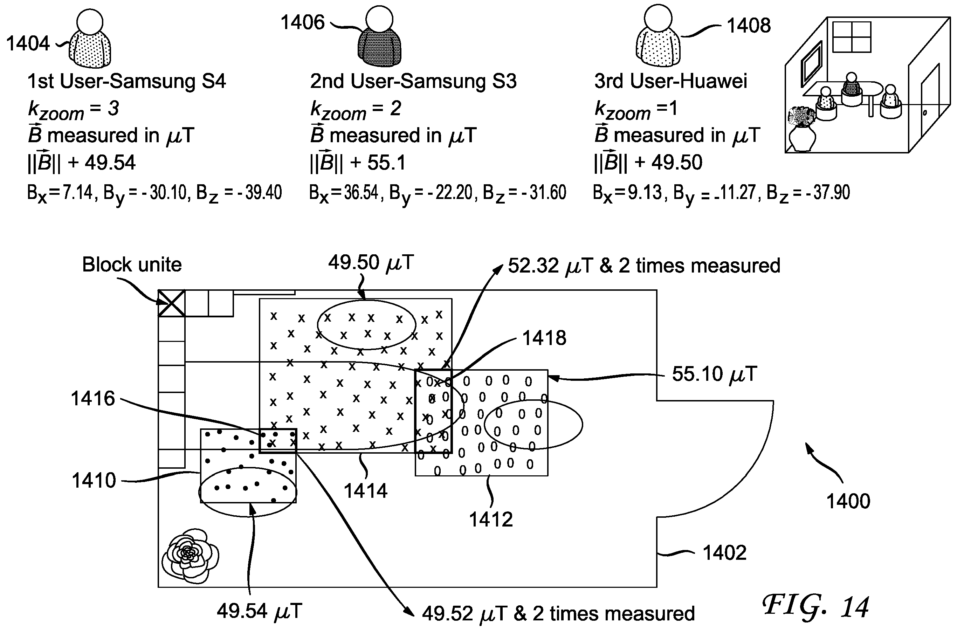

FIG. 13 depicts an example building summarizing method 1300 of a magnetic field map 1302 in accordance with an embodiment of the present principles. The summarizing method 1300 is graphically illustrated in FIG. 13 by overlaying the inner square 1304 determined in FIG. 11 and the inner square 1306 determined in FIG. 12. The overlap of the inner squares 1308 further refines the magnetic field for that area. FIG. 14 further illustrates an example 1400 of how collaborative magnetic field map building of a room 1402 occurs in accordance with an embodiment of the present principles. Each user 1404-1408 takes measurements 1410-1414, respectively, in the same room 1402. The overlap areas 1416, 1418 help to further refine the magnetic fields in those parts of the room 1402.

During the building phase of the ambient magnetic field map, a user location can be estimated using a localization method hosted on a server (e.g., a gateway, remotely located server, etc.) which analyzes the similarities between a current measurement of the magnetic field components at a given location and those stored so far in a magnetic field map under construction before updating. The estimated location is then compared with the received position validated by the user with associated accuracy. When the actual position (i.e., the position indicated by an authorized user during a map building phase) is compliant with the estimated location for a predefined number of measurements, the map is considered ready for use by the localization algorithm, for that localization, and it can be downloaded by mobile devices for running of a localization application on a mobile device, via for example a wired and/or wireless link between the mobile device and the server. The continuously refreshed magnetic field map at the server side can be downloaded on a mobile device of an authorized user at his request and/or automatically (without a user request). Main updates of the magnetic field map, resident on the mobile device, can be done regularly and at the occasion of significant changes, such as, for example, home refurbishment and the like.

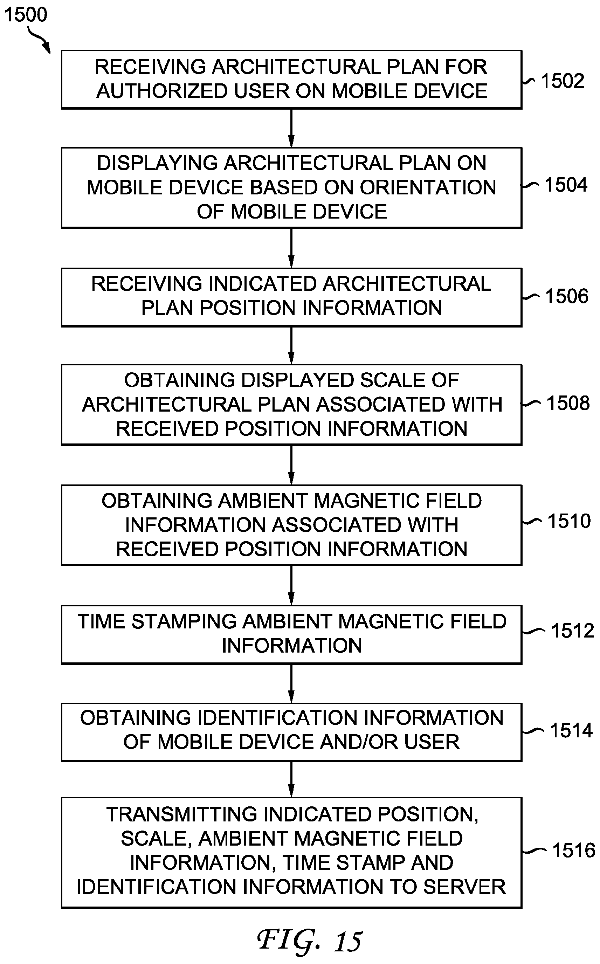

In view of the techniques described above, methodologies that can be implemented in accordance with the embodiments will be better appreciated with reference to the flow charts of FIGs. 15-17. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and/or* concurrently with other blocks from that shown and described herein. Moreover, not all illustrated blocks may be required to implement the methodologies in accordance with the embodiments.

FIG. 15 is a flow diagram of a method 1500 of obtaining magnetic field information with a mobile device in accordance with an embodiment of the present principles. The method starts by receiving an architectural plan for an authorized user on a mobile device 1502. In order to maintain the validity of the data used for creating a magnetic field map, only users authorized to collect data can send data to a server for map building. This facilitates to maintain the integrity of the magnetic field map. Authorization can be accomplished through access codes that are embedded with an architectural map and/or code pairs that require an end user to enter a correct code for accessing the architectural map. Other means of authorizing can include, but are not limited to, an administrator who determines which users have access rights, determination of access based on physical assets such as unique MAC IDs, etc. of a mobile device and/or by unique user IDs, etc. Once the architectural plan is received and authorization has been established, the architectural plan is displayed on the mobile device based on the orientation of the mobile device 1504.

Users will then typically indicate on the architectural map their position which is received by the mobile device 1506. The mobile device obtains the displayed scale (zoom factor) of the architectural plan associated with the received indicated position information 1508 along with the ambient magnetic field information also associated with the received indicated position information 1510. Timing information such as, for example, a time stamp is also associated with the obtaining of the ambient magnetic field information 1512. The information is further associated with the mobile device and/or user by utilizing unique identification information 1514. This can be a user ID code entered into the mobile device and/or the mobile device can already have prior user ID information that it can retrieve. The mobile device can also utilize its own unique ID information such as its MAC address and the like. The indicated position, scale (zoom factor), ambient magnetic field information, timing information and identification information can then be transmitted to a server 1516. This is not to limit that only these parameters can be sent to the server. The information can contain more parameters and/or the parameters can be sent at differing times. Data time stamps can be used by the server to re-associate the data when it is received at different times. The server can be local and/or remote to the mobile device.

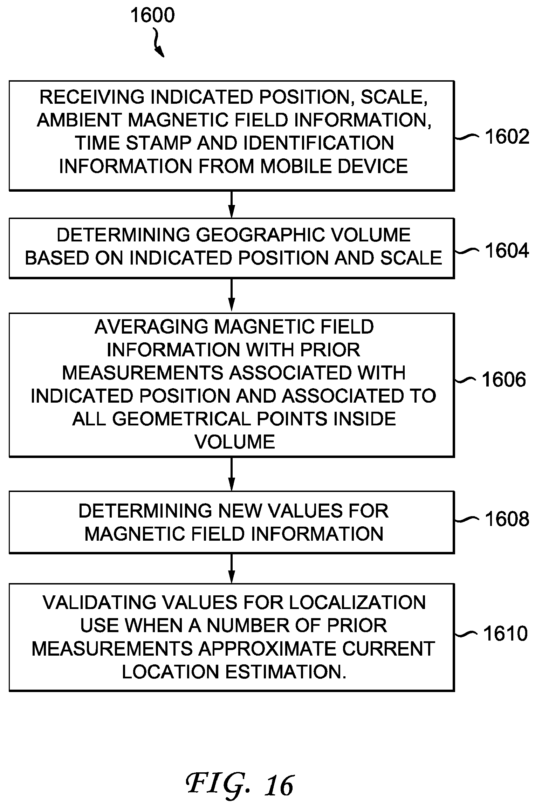

FIG. 16 depicts a flow diagram of a method 1600 of collaborative magnetic map building in a server in accordance with an embodiment of the present principles. Indicated position, scale (zoom factor), ambient magnetic field information, timing information and identification information are received from a mobile device 1602. Typically, the information is processed in a server and can be directly and/or indirectly received by the server. The information can be received all at once or individually or in partial groupings. Timing information with the data can be used to re-associate the parameters for processing. A geographic volume is then determined based on the indicated position and the scale (zoom factor) 1604. The magnetic field information is averaged with prior measurements associated with the indicated position and associated to all geometrical points inside the geographic volume 1606. New values for magnetic field information are then determined 1608. Values for localization use are then validated when a number of prior measurements approximate the current position estimation 1610. The number of prior measurements can be predetermined and/or determined based on evolving criteria such as authenticity, accuracy, source and/or other criteria that can change over time and/or with additional information and the like.

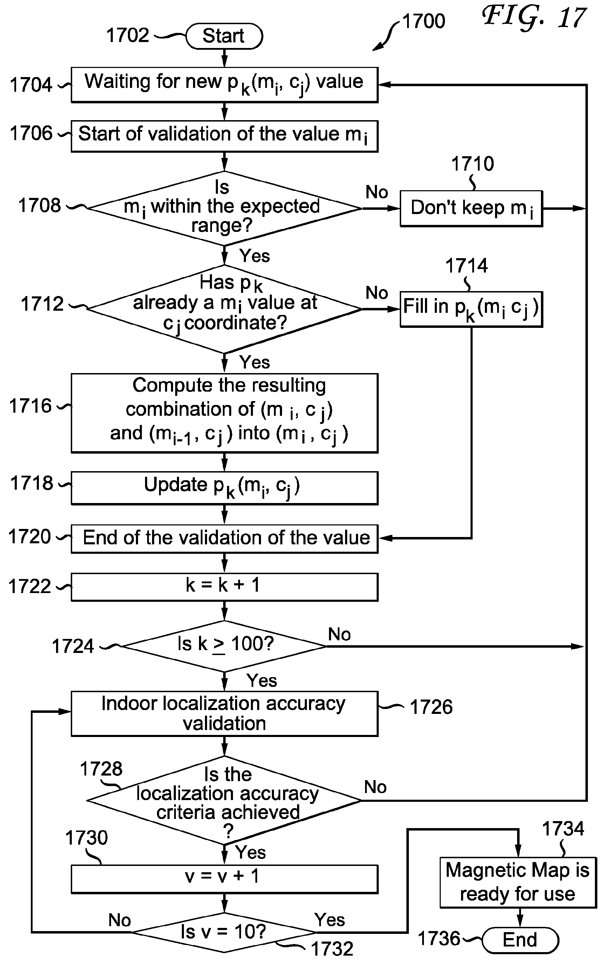

FIG. 17 depicts a flow diagram of a method 1700 of collaborative magnetic map building in accordance with an embodiment of the present principles. At the start 1702, it is assumed that all magnetic map points $p_k(m_i, c_j)$ are empty with $c_j$ the coordinate of the magnetic module of value $m_i$. The flow waits for a new $p_k(m_i, c_j)$ value 1704. When a new value is received, the validation of the value $m_i$ is performed 1706. A check is made to determine if $m_i$ is within an expected range (to remove aberration point $p$) 1708. If not, it is not kept 1710. If yes, a check is made to determine $p_k$ already has an $m_i$ value at $c_j$ coordinate 1712. If no, the value is used to fill in magnetic map points $p_k(m_i, c_j)$ (see, for example, FIG. 13, inner squares 1304) 1714, ending the validation of the value 1720. If yes, the resulting combination of the new value, $m_i, c_j$, and the prior value, $m_{i-1}, c_j$, are computed into a resulting value, $m_i, c_j$ (see, for example, FIG. 13, inner squares 1308) 1716. Different computing strategies can be applied depending if $m$ value originates from the same or a different mobile device: mean value, normalization, offset, etc. The mapping point, $p_k(m_i, c_j)$ is then updated 1718, ending the validation of the value 1720. The minimum number of validated points, $k$, necessary to start evaluating an indoor localization accuracy is initialized at $k = 0$ and then incremented each time an $m$ value is validated 1722.

A check is made as to whether $k$ has reached some maximum value required to be considered for indoor localization accuracy validation 1724. In this example, the value is selected to be 100, but can be any number. If $k$ is less than the maximum value, the flow allows for additional $m$ values to be evaluated. If $k$ has met or exceeded the maximum value, indoor localization accuracy validation occurs for use with a magnetic map 1726. The methods for validation compare the ground truth geolocalization point with an estimated one and if a required accuracy criterion is achieved $v$ times, it validates the usage of the magnetic map. Thus, a check is made as to whether the localization accuracy criteria has been achieved 1728. If not, additional $m$ values can be received for processing. If yes, $v$ is incremented 1730 ($v$ is initialized at $v = 0$) and checked to see if it has reached a predetermined value 1732 (in this example, 10 has been selected as the predetermined value but any value can be selected). If no, additional validation can occur. If yes, the magnetic map is ready for use 1734, ending the flow 1736.

FIG. 17 represents a simplified flow chart of a magnetic field map generation. As a variation of the proposed magnetic field mapping procedure, a magnetic field map can be organized into no overlapping sub maps called 'zones' that can anticipate the indoor localization method usage as long as the accuracy criteria is achieved within the considered zone. It can be appreciated that the flow chart represented in FIG. 17 is applicable for zone mapping as well.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations. Furthermore, to the extent that the term "includes" is used in either the detailed description or the claims, such term is intended to be inclusive in a manner similar to the term "comprising" as "comprising" is interpreted when employed as a transitional word.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor output from a decoder, a pre-processor providing input to an encoder, a video coder, a video decoder, a video codec, a web server, a set-top box, a laptop, a personal computer, a cell phone, a PDA and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, an optical disc (such as, for example, a CD also known as a compact disc and/or a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. An apparatus for magnetic map information gathering, comprising:

   means for displaying an architectural plan on a mobile device according to an orientation of the mobile device (104, 202, 204, 206);
   means for receiving an indication of a position of a mobile device user on the architectural plan (102, 104, 204, 208);
   means for obtaining a scale of the displayed architectural plan in response to the received indication (204, 206);
   means for obtaining ambient magnetic field information associated with the indicated position (202, 216);
   means for obtaining identification information of a mobile device or user (202, 210); and
   means for transmitting the indicated position, scale, ambient magnetic field information and identification information to a server (202, 212).

2. The apparatus of claim 1, further comprising:

   means for displaying an indicator of a user's orientation on the architectural plan.

3. The apparatus of claims 1 or 2, wherein the identification information of the mobile device is a media access control MAC address.

4. The apparatus of claims 1 to 3, wherein at least one of the means for receiving and the means for transmitting includes at least one of a wired communication means and a wireless communication means.

5. The apparatus of claims 1 to 4, further comprising:

   means for accepting an indication of position when at least one wall displayed on the architectural plan is parallel to at least one side of the mobile device.

6. The apparatus of claims 1 to 5, further comprising:

   means for receiving an updated magnetic field map for localization from a server.

7. A method for gathering magnetic map information, comprising:

   displaying an architectural plan on a mobile device according to an orientation of the mobile device (1504);
   receiving an indication of a position of a mobile device user on the architectural plan (1506);
   obtaining a scale of the displayed architectural plan in response to the received indication (1508);
   obtaining ambient magnetic field information associated with the indicated position (1510);
   obtaining identification information for at least one of a mobile device and a user (1514); and
   transmitting the indicated position, scale, ambient magnetic field information and identification information to a server (1516).

8. The method of claim 7, further comprising:

   using a media access control MAC address as identification information for the mobile device.

9. The method of claims 7 or 8, wherein at least one of the receiving of the architectural plan and the transmitting of information is accomplished over a wired communication means.

10. The method of claims 7 to 9, further comprising:

    accepting an indication of position when at least one wall displayed on the architectural plan is parallel to at least one side of the mobile device.

11. The method of claims 7 to 10, further comprising:

    displaying an indicator of a user's orientation on the architectural plan.

12. The method of claims 7 to 11, further comprising:

    receiving an updated magnetic field map for localization from a server.

13. A method for generating a magnetic map, comprising:

    receiving indicated position, scale, ambient magnetic field information and identification information (1602);
    determining a geographic volume based on the indicated position and scale (1604);
    averaging the magnetic field information with prior measurements associated with the indicated position and associated to geometrical points inside the determined geographical volume (1606);
    determining new values for magnetic field information (1608); and
    validating values for localization use when a number of prior measurements approximate a current location estimation (1610).

14. The method of claim 13, further comprising:

    transmitting an updated magnetic field map for localization to a mobile device.

**15.** An apparatus for generating a magnetic map, comprising:

means for receiving indicated position, scale, ambient magnetic field information and identification information (212, 222);
means for determining a geographic volume based on the indicated position and scale (222);
means for averaging the magnetic field information with prior measurements associated with the indicated position and associated to all geometrical points inside the determined geographic volume (222);
means for determining new values for magnetic field information (222); and
means for validating values for localization use when a number of prior measurements approximate a current location estimation (222).

100

102

WIRELESS COMMUNICATIONS — 108

104

110 — MAGNETOMETER

112 — GYROSCOPE

116 — ACCELEROMETER

114

106 — MAGNETIC FIELD INFORMATION MANAGER

MEMORY

*FIG. 1*

*FIG. 2*

Building Select
Floor White Building
1st White Building
2nd White Building
3rd White Building
Floor Red Building
1st Red Building
2nd Red Building
3rd Red Building

Choice of the map

Zoom at a room

*FIG. 3*

FIG. 4

FIG. 5

Zoom at room level

Way each user holds his smartphone

User's Hand

User location/orientation indicator

EP 3 184 963 A1

FIG. 6

$\vec{B}$

Indicator coordinates (X, Y, Z) 710

Magnetic field B($B_x$, $B_y$, $B_z$) 708

700

702

706

704

FIG. 7

EP 3 184 963 A1

19

800     800

IndoorGPSTechnicolor.txt - No....     —  ▢  X

File   Edit   Format   View   Help

802

|[User/Mobile Device ID t;
User 1/Samsung S4 31/07/2015
Location(X,Y,Z);kZoom;(Bx, By, Bz)]i;
i=1,2, ...N
5,4,2 3 7.14. -30.10,-39.40,-39,40
1,2,5 3 36.54, -22.20,-31.60

*FIG. 8*

900

$2\Delta$

904

$2\Delta$

906

x P(X,Y,Z)

902

~1.0m

*FIG. 9*

2Δ

1000

2Δ

1002

2Δmin

1004

The finest
granularity

Filling of the volume V

*FIG. 10*

$\Delta 1 = \Delta_{Max} / (k_{Zoom})_1$

$B_1 = \Sigma(B_i)_1 / K_1; \ i = 1 \ldots K_1$

$\delta_1 = $ SD of $B_1$

*FIG. 11*

EP 3 184 963 A1

FIG. 12

$\Delta 2 = \Delta_{Max} / (k_{Zoom})_2$
$B_2 = \Sigma(B_i)_2 / K_2$; $i = 2...K_2$
$\delta_2 = SD$ of $B_2$

1200

2Δmin

2Δmin

2Δ2

2Δ2

1204

1202

$B_2;\delta_2$ $B_2;\delta_2$

$B_2;\delta_2$ $B_2;\delta_2$

EP 3 184 963 A1

23

$$B = (W_1 \times B_1 + W_2 \times B_1)/(W_1 + W_2)$$

$$\delta^2 = [\delta_{n-1}^2 \times W_{n-1} + \delta_n^2 \times W_n]/[W_{n-1} + W_n];$$

$$W_1 = 1/\Delta1$$

$$W_2 = 1/\Delta2$$

**FIG. 13**

EP 3 184 963 A1

**1404** — 1st User-Samsung S4
$k_{zoom} = 3$
$\vec{B}$ measured in $\mu T$
$||\vec{B}|| + 49.54$
$B_x = 7.14$, $B_y = -30.10$, $B_z = -39.40$

**1406** — 2nd User-Samsung S3
$k_{zoom} = 2$
$\vec{B}$ measured in $\mu T$
$||\vec{B}|| + 55.1$
$B_x = 36.54$, $B_y = -22.20$, $B_z = -31.60$

**1408** — 3rd User-Huawei
$k_{zoom} = 1$
$\vec{B}$ measured in $\mu T$
$||\vec{B}|| + 49.50$
$B_x = 9.13$, $B_y = -11.27$, $B_z = -37.90$

Block unite

49.50 $\mu T$

52.32 $\mu T$ & 2 times measured

1418

55.10 $\mu T$

1416

1410

1414

1412

1400

1402

49.54 $\mu T$

49.52 $\mu T$ & 2 times measured

*FIG. 14*

1500

RECEIVING ARCHITECTURAL PLAN FOR
AUTHORIZED USER ON MOBILE DEVICE ⟿ 1502

DISPLAYING ARCHITECTURAL PLAN ON
MOBILE DEVICE BASED ON ORIENTATION
OF MOBILE DEVICE ⟿ 1504

RECEIVING INDICATED ARCHITECTURAL
PLAN POSITION INFORMATION ⟿ 1506

OBTAINING DISPLAYED SCALE OF
ARCHITECTURAL PLAN ASSOCIATED WITH
RECEIVED POSITION INFORMATION ⟿ 1508

OBTAINING AMBIENT MAGNETIC FIELD
INFORMATION ASSOCIATED WITH
RECEIVED POSITION INFORMATION ⟿ 1510

TIME STAMPING AMBIENT MAGNETIC FIELD
INFORMATION ⟿ 1512

OBTAINING IDENTIFICATION INFORMATION
OF MOBILE DEVICE AND/OR USER ⟿ 1514

TRANSMITTING INDICATED POSITION,
SCALE, AMBIENT MAGNETIC FIELD
INFORMATION, TIME STAMP AND
IDENTIFICATION INFORMATION TO SERVER ⟿ 1516

*FIG. 15*

1600

RECEIVING INDICATED POSITION, SCALE, AMBIENT MAGNETIC FIELD INFORMATION, TIME STAMP AND IDENTIFICATION INFORMATION FROM MOBILE DEVICE — 1602

DETERMINING GEOGRAPHIC VOLUME BASED ON INDICATED POSITION AND SCALE — 1604

AVERAGING MAGNETIC FIELD INFORMATION WITH PRIOR MEASUREMENTS ASSOCIATED WITH INDICATED POSITION AND ASSOCIATED TO ALL GEOMETRICAL POINTS INSIDE VOLUME — 1606

DETERMINING NEW VALUES FOR MAGNETIC FIELD INFORMATION — 1608

VALIDATING VALUES FOR LOCALIZATION USE WHEN A NUMBER OF PRIOR MEASUREMENTS APPROXIMATE CURRENT LOCATION ESTIMATION. — 1610

*FIG. 16*

FIG. 17

1700

1702 — Start

1704 — Waiting for new $p_k(m_i, c_j)$ value

1706 — Start of validation of the value $m_i$

1708 — Is $m_i$ within the expected range? — No → Don't keep $m_i$ (1710)

Yes

1712 — Has $p_k$ already a $m_i$ value at $c_j$ coordinate? — No → Fill in $p_k(m_i c_j)$ (1714)

Yes

1716 — Compute the resulting combination of $(m_i, c_j)$ and $(m_{i-1}, c_j)$ into $(m_i, c_j)$

1718 — Update $p_k(m_i, c_j)$

1720 — End of the validation of the value

1722 — $k = k + 1$

1724 — Is $k \geq 100$? — No →

Yes

Indoor localization accuracy validation — 1726

1728 — Is the localization accuracy criteria achieved? — No →

Yes

1730 — $v = v + 1$

1732 — Is $v = 10$? — No → / Yes →

1734 — Magnetic Map is ready for use

1736 — End

Europäisches
Patentamt
European
Patent Office
Office européen
des brevets

# EUROPEAN SEARCH REPORT

Application Number

EP 15 30 7120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IndoorAtlas: "IndoorAtlas' indoor location technology",<br><br>5 July 2012 (2012-07-05), XP002758312,<br>Retrieved from the Internet:<br>URL:https://www.youtube.com/watch?v=PkehW3fkpLQ<br>[retrieved on 2016-05-31]<br>* the whole document * | 1-15 | INV.<br>G01C21/20<br>G01S5/00<br>H04W4/00 |
| A | WO 2015/184304 A1 (APPLE INC [US]; STANGER PHILIP [US]; MONDRAGON IAN ARIC [US]; LO DAVID) 3 December 2015 (2015-12-03)<br>* paragraph [0053] - paragraph [0061]; figures 3a,3b * | 1-15 | |

TECHNICAL FIELDS
SEARCHED (IPC)

G01C
H04W
G01S
G06F
H04M

The present search report has been drawn up for all claims

| Place of search | Date of completion of the search | Examiner |
|---|---|---|
| The Hague | 1 June 2016 | Chapple, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 7120

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2016

| Patent document cited in search report | Publication date | Patent family member(s) | Publication date |
|---|---|---|---|
| WO 2015184304 A1 | 03-12-2015 | US 2015347455 A1<br>WO 2015184304 A1 | 03-12-2015<br>03-12-2015 |

EPO FORM P0459

For more details about this annex : see Official Journal of the European Patent Office, No. 12/82